# EUROPEAN PATENT APPLICATION

(11) **EP 4 564 279 A1**
(43) Date of publication of application: **04.06.2025**
(21) Application number: 23846043.0
(22) Date of filing: 13.06.2023
(51) Int. Cl.: G06Q 50/10, C08J 11/04, G06K 7/14, G06K 19/08

(54) **IDENTIFICATION MANAGEMENT SYSTEM AND IDENTIFICATION MANAGEMENT METHOD**

(30) Priority: 27.07.2022 JP 2022119893
(71) Applicant: Hitachi, Ltd., Tokyo 100-8280 (JP)
(72) Inventor: MORI Shunsuke, Tokyo 100-8280 (JP); NOMURA Koutarou, Tokyo 100-8280 (JP); SUKEGUCHI Satoshi, Tokyo 100-8280 (JP); KURATA Sayaka, Tokyo 100-8280 (JP); SUZUKI Hiroyuki, Tokyo 100-8280 (JP); NAKATSUCHI Hiroki, Tokyo 100-8280 (JP)
(74) Representative: Mewburn Ellis LLP
(86) International application number: PCT/JP2023/021936
(87) International publication number: WO 2024/024308

(57) **Abstract**

An identification management system for managing traceability of a molded body of the present invention includes a molded body information acquisition unit (1) that acquires image information of the molded body, an identification information conversion unit (2) that converts a random pattern in a predetermined region of the image information into identification information, and an information control unit (8) that performs processing of storing production information and life cycle information of the molded body in a molded body management DB (3) for each piece of identification information, and individually manages a life cycle from design to production, usage, and disposal of a product for the molded body of the product.

## Description

### Technical Field

The present invention relates to an identification management system and an identification management method.

### Background Art

In recent years, due to environmental and resource problems, it is required for business operators related to products to work on the cyclic use of resources such as plastics. This plastic is applied to a wide variety of products because it has good processing moldability and can also impart functions by compounding. Thus,
in the recycle of plastic, a treatment method is selected on the basis of a method of recycling by using a type and a component of a resin, a product application, and history information such as a use record.

For example, PTL 1 describes a technique for solving a problem that a plastic is melted by heat generated by absorption of a carbon filler when a black plastic containing the carbon filler is irradiated with strong laser light, and a Raman scattering spectrum cannot be measured in a plastic identification device that irradiates the crushed and blended plastic conveyed by a conveying means with laser light, detects reflected light or scattered light from the crushed and blended plastic by a detection element, and identifies a type of the plastic and an additive thereof on the basis of a detection result.

Information on the plastic materials of products is written directly on the products (ISO), attached directly to the products with the written label, and written in the product packaging/attached documents, which can be referred to.

### Citation List

### Patent Literature

PTL 1: JP 2011-122969 A

### Summary of Invention

### Technical Problem

According to the above-described prior art, the identification accuracy of the pulverized plastic can be improved, but the use history cannot be grasped.

In addition, in a plastic product, it is difficult to acquire information regarding the determination of the type and component of the resin and the use management history from the appearance. The notations established in ISO and JIS are about the type of resin and main additives, and the amount of information is small. Labeling has an influence on designs and the like in small products, and there is an information loss risk due to peeling, and it is not possible to sufficiently determine the type and component of the resin and acquire information on the use management history.

With the product packaging and attached documents, it is difficult to confirm the correspondence due to loss by disposal or the like or change of the owner manager during the period from product usage to disassembly and disposal. Further, since the quality state of the collected product depends on the use history, it is desirable to perform individual (ID) management, but conventional marking of a label or a code has a risk of falsification. Furthermore, in the case of a label, it is necessary to perform a treatment for preventing and separating the label from being mixed as a foreign substance at the time of recycling.

An object of the present invention has been made in view of the above problems, and an object of the present invention is to provide an identification management system and an identification management method for individually managing a life cycle from design to production, use, and disposal of a product for a molded body of the product.

### Solution to Problem

In order to solve the above problems, an identification management system for managing traceability of a molded body of the present invention includes: a molded body information acquisition unit that acquires image information of the molded body; an identification information conversion unit that converts a random pattern in a predetermined region of the image information into identification information; and an information control unit that performs processing of storing production information or life cycle information of the molded body in a molded body management database for each piece of the identification information.

### Advantageous Effects of Invention

According to the present invention, it is possible to individually and seamlessly collect and manage management information in a life cycle for not only a product but also each molded body constituting the product.

### Brief Description of Drawings

[FIG. 1] FIG. 1 is a diagram showing an example of a molded body to be identified.
[FIG. 2A] FIG. 2A is a view showing another example of the molded body.
[FIG. 2B] FIG. 2B is a view showing another example of the molded body.
[FIG. 2C] FIG. 2C is a view showing another example of the molded body.
[FIG. 2D] FIG. 2D is a view showing another example of the molded body.
[FIG. 2E] FIG. 2E is a view showing another example of the molded body.
[FIG. 2F] FIG. 2F is a view showing another example of the molded body.
[FIG. 3] FIG. 3 is a diagram illustrating a configuration of an identification management system according to an embodiment.
[FIG. 4] FIG. 4 is a diagram illustrating an example of a molded body information acquisition unit.
[FIG. 5] FIG. 5 is a diagram showing another example of a molded body information acquisition unit.
[FIG. 6] FIG. 6 is a flowchart of conversion processing of identification information.
[FIG. 7] FIG. 7 is a diagram showing a field configuration of production information in a molded body management DB.
[FIG. 8] FIG. 8 is a diagram illustrating a field configuration of life cycle information of a molded body management DB.
[FIG. 9] FIG. 9 is a view for explaining a molded body management method in detail.

### Description of Embodiments

Hereinafter, embodiments of the present invention will be described in detail with reference to the drawings. Note that the embodiments of the present invention are not limited to the embodiments described later, and various modifications can be made within the scope of the technical idea. Note that the same reference numerals are given to corresponding parts in the respective drawings used for description of the respective embodiments to be described later, and redundant description is omitted.

First, an outline of an identification method of a molded body such as a thermoplastic resin in the identification management system according to the embodiment will be described.

The base material of the molded body to be identified is preferably a thermoplastic resin from the viewpoint of molding processability and material recycling, and includes thermoplastic resin such as polyethylene (PE), polypropylene (PP), polystyrene (PS), acrylonitrile-butadiene-styrene copolymer synthetic resin (ABS), polyvinyl alcohol (PVA), polyvinyl chloride (PVC), polycarbonate (PC), polyethylene terephthalate (PET), polybutylene terephthalate (PBT), polyamide (PA), polyether ether ketone (PEEK), ethylene vinyl acetate copolymer (EVA), polylactic acid (PLA), polybutylene succinate (PBS), polybutylene adipate terephthalate resin (PBAT), thermoplastic starch, polyhydroxybutyrate (PHB), 3-hydroxybutyrate-co -3 hydroxyhexanoate polymer (PHBP), polytetrafluoroethylene (PTFE), ethylene-tetrafluoroethylene (ETFE), perfluoroalkoxy (PFA), thermoplastic resins such as ethyl trifluoroacetate (PEEK), polychlorotrifluoroethylene (EVA), and ethylene-chlorotrifluoroethylene copolymer (PLA).

The additive is preferably one that is compatible with the molding and processing process of the base material after blending and is retained in the base material. The thermoplastic resin is selected from any of mica, talc, carbon, nitride, metal (Aluminum, gold, silver, etc.), metal oxide (Zinc oxide, titanium oxide, iron oxide, silicate, and the like), metal hydroxide (aluminum hydroxide, magnesium hydroxide, etc.), clay mineral, glass particles, urethane resin, organic pigment (azo compound, phthalocyanine compound), glass fiber, carbon fiber, plant fiber such as hemp fiber, wheat straw, and rice straw, and wood flour, bamboo flour, coffee grounds, and tea leaves of other plant biomass.

In the application of a metal or a metal oxide and a metal nitride using a resin as a base material, magnesium and aluminum are preferable because the oxidation reaction caused by the catalytic action (redox reaction) of the metal ion is small. In the application of particles of zinc, silver, calcium, titanium, nickel, vanadium, iron, copper, manganese, and oxides and nitrides containing them, it is preferable to coat the surface of the particles with silicic acid or the like that inhibits the generated radicals from acting on the resin, or to add a stabilizer such as a radical chain initiation inhibitor, a radical scavenger, or a peroxide separation material to the base material. When the molded body is used in an environment exposed to ultraviolet rays such as outdoors, deterioration of the resin as a base material can be suppressed by applying particles in which surfaces of zinc oxide and titanium oxide absorbing ultraviolet rays are coated with silicic acid.

The base material of the molded body is not limited to the thermoplastic resin, and may be metal, ceramics, or glass.

In the present embodiment, a case where the base material of the molded body is PP, and mica, talc, carbon, or hemp fiber is applied as an additive will be described.

The molded body to be identified according to the present embodiment is molded by injecting a base material of a thermoplastic resin blended with an additive. Due to the flow of the base material at the time of injection, the distribution of the additive is changed, and a random pattern with low reproducibility due to the additive or the like is developed in the tissue structure/interface. This random pattern differs for each molded body to be injection-molded, and also differs depending on the location of the molded body.

The identification management system of the present embodiment uses this pattern as identification information of each molded body to improve traceability of the molded body.

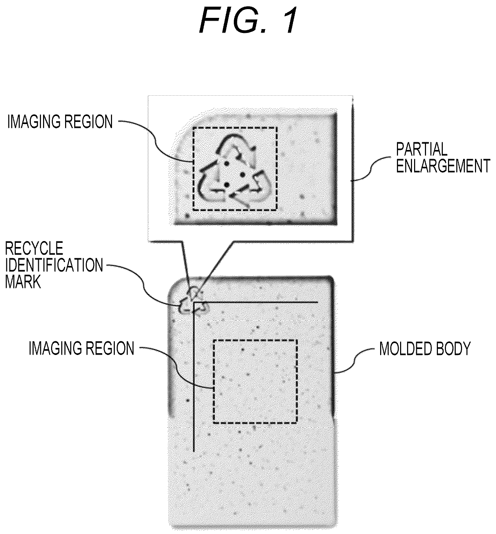

FIG. 1 is a diagram showing an example of a molded body to be identified. The molded body exhibits a random pattern (random dot pattern) with low reproducibility due to the additive material on the surface. Further, on the surface of the molded body, a recycle identification mark engraved in a mold and expressed by injection molding is displayed. In addition to the recycle identification mark, material display of plastic parts, recycle mark display, or display for facilitating manual disassembly and sorting of parts such as plastic may be performed.

The identification management system according to the embodiment images the surface of the molded body and digitizes the image information to obtain identification information. Since the random dot pattern on the surface of the molded body differs for each molded body, the identification information obtained from the image information of the predetermined region on the surface of the molded body differs for each molded body. The identification management system according to the embodiment individually manages a life cycle until production, usage, and disposal of the molded body based on the identification information.

The identification management system according to the embodiment digitizes the image information of the molded body in a two-dimensional coordinate system and converts the image information into identification information.

Specifically, the identification management system of the embodiment converts the information of each coordinate of the image information by a method of arranging information of each coordinate of the image information according to a specified rule by binarization (examples, 0 and 1) based on a threshold, signal strength enhancement (example, 256 gray-scales) by grayscale, or color information enhancement (example, color coding to RGB), a method of digitizing (a ratio of 0 and 1 in binarization, or the like) a signal strength distribution, a method of acquiring the information as a spatial frequency, and a method of digitizing the information by machine learning according to a conversion algorithm separately created by percitent homology. In the present embodiment, the image information of the molded body is binarized and described in a matrix, and the image information is converted into the identification information by a conversion means of the identification information such as a method of arranging the image information according to a rule.

In addition, the identification management system according to the embodiment may convert the number of singular points of a random pattern in a predetermined region of the image information, the arrangement of the patterns, the area ratio of the patterns, the contrast of the predetermined region of the image information, or the chromaticity of the predetermined region into the identification information.

Next, a region (imaging region) of the image information for acquiring the identification information of the molded body will be described.

The imaging region is an outer peripheral shape of the molded body or a partial region of the molded body. The region may have any shape such as a rectangular region or a circular region.

In a case where a part of the molded body is used as the imaging region, as shown in FIG. 1, a region of a predetermined size including a mark such as the recycle identification mark in the center is used as the imaging region, or a region of a predetermined size separated from the position of the mark such as the recycle identification mark by a predetermined distance is used as the imaging region.

In addition, in a case where a part of the molded body is used as an imaging region, a unique position and region size of a random pattern appearing in at least one molded body are selected.

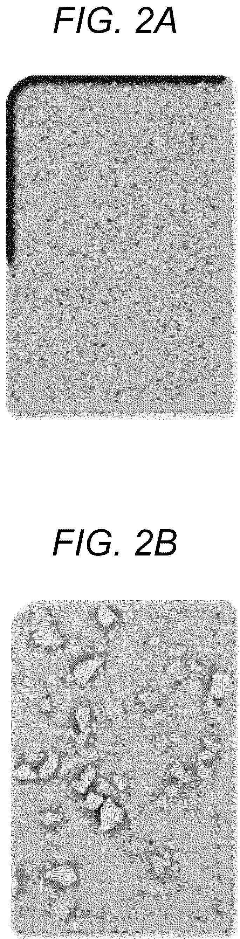

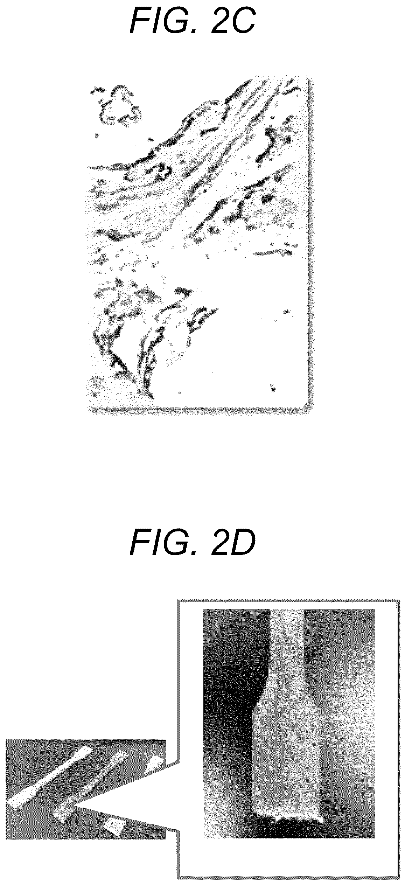

Another example of the molded body will be described with reference to FIGS. 2A, 2B, 2C, and 2D.

FIG. 2A is a view showing an example of a molded body of a satin pattern.

FIG. 2B is a view showing an example of a molded body of a grainy pattern.

FIG. 2C is a view showing an example of a molded body of a marble pattern.

FIG. 2D is a view showing an example of a molded body in which a streaky fractal pattern blended with hemp fibers is formed.

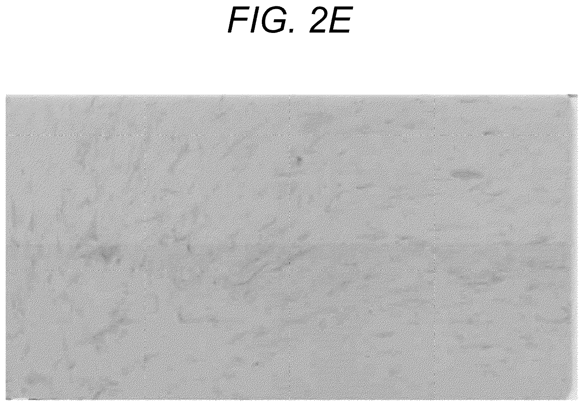

FIG. 2E is a view showing an example of a molded body of a noise pattern.

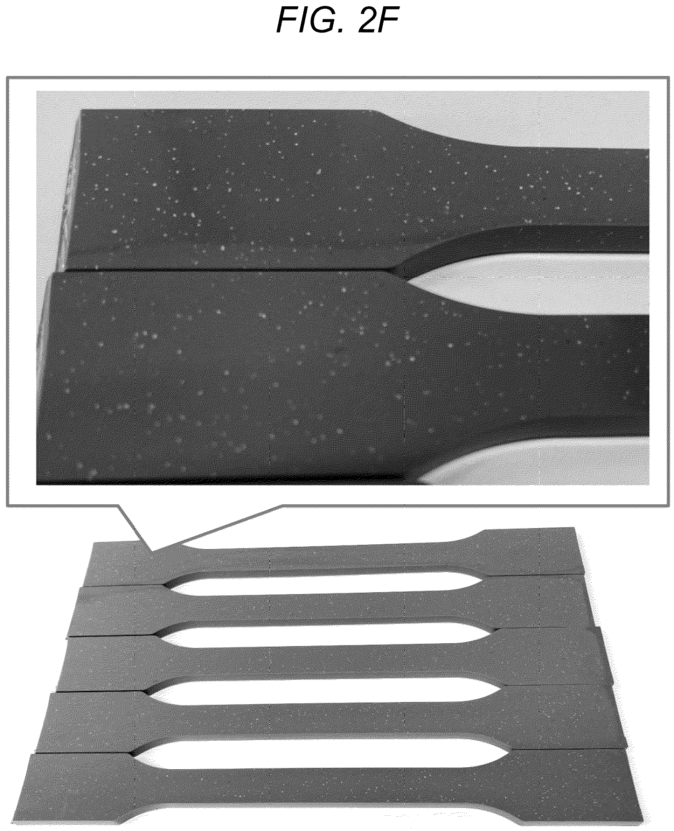

FIG. 2F is a view showing an example of a molded body of a particle pattern in which mica and aluminum of a fragment-like luster material are blended.

Hereinafter, the identification management system according to the embodiment will be specifically described.

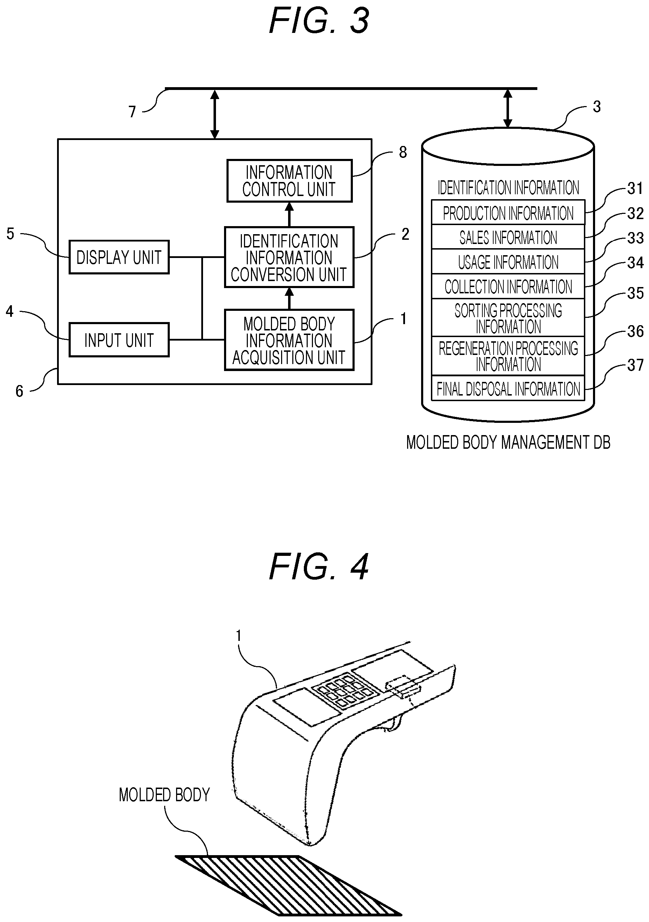

FIG. 3 is a diagram illustrating a configuration of an identification management system according to an embodiment.

An identification management system according to an embodiment includes: an identification management device 6 including a molded body information acquisition unit 1 that acquires image information of a molded body, an identification information conversion unit 2 that converts the image information acquired by the molded body information acquisition unit 1 into identification information, an input unit 4 that inputs production information of the molded body and traceability information of the molded body, a display unit 5 that displays the converted identification information and traceability information of the molded body corresponding to the identification information, and an information control unit 8 that manages the production information of the molded body and the traceability information of the molded body on the basis of the identification information; and a molded body management database 3(hereinafter, also referred to as a molded body management DB3) that is connected to the identification management device 6 via a network 7 and stores the traceability information of the molded body on the basis of the identification information converted by the identification information conversion unit 2.

Specifically, the molded body information acquisition unit 1 acquires random patterns and marks of the tissue structure/interface of the molded body by non-destructive measurement using electromagnetic waves such as visible light, infrared rays, and infrared rays, ultrasonic waves, or the like that do not affect the strength of the molded body.

The molded body information acquisition unit 1 includes a semiconductor sensor such as a CMOS image sensor or a CCD image sensor, or a light receiving device such as a high electron multiplier tube, and a laser scanning unit such as a galvanometer mirror. The molded body information acquisition unit 1 may be provided with an electromagnetic wave irradiation device for irradiating the molded body with electromagnetic waves.

The identification management device 6 in the identification management system of the embodiment is used by a molded body to be identified or a seller, a user, a collector, and a final disposer of a product having the molded body. In this case, as illustrated in FIG. 4, the molded body information acquisition unit 1 of the identification management device 6 may be a handy terminal with an optical camera or a smartphone, or may be a separate device. Accordingly, reading work can be performed in a location-free manner.

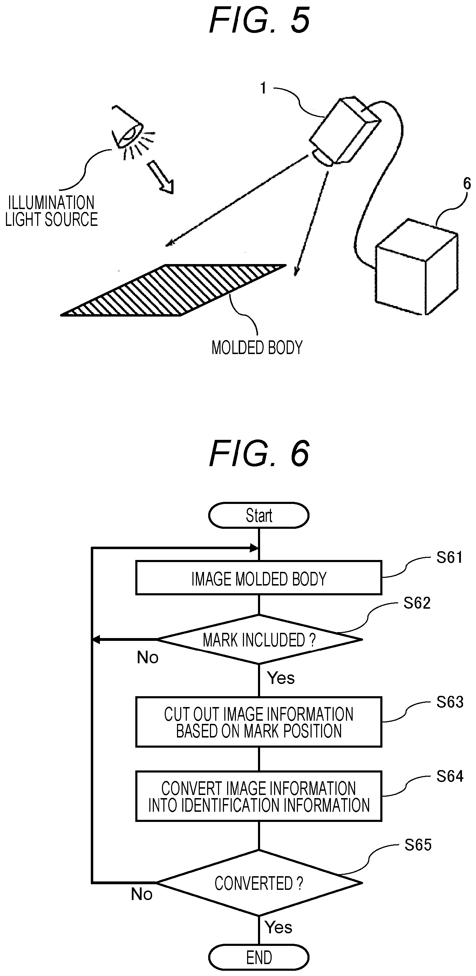

The identification management device 6 in the identification management system according to the embodiment is used by a molded body to be identified, or a manufacturer of a product including the molded body, a manufacturer of a regenerated product of the molded body, a sorting processing company, and a regeneration processing company. In this case, as illustrated in FIG. 5, the molded body information acquisition unit 1 of the identification management device 6 may be a fixed camera and illuminate the molded body with an illumination light source to acquire image information of the molded body.

Returning to FIG. 3, the identification information conversion unit 2 of the identification management device 6 digitizes image information, which is a random pattern of the molded body, acquired by the molded body information acquisition unit 1, and converts the image information into identification information.

FIG. 6 is a flowchart of processing of converting the identification information of the molded body information acquisition unit 1 and the identification information conversion unit 2.

FIG. 6 is a flowchart in a case where a region separated by a predetermined distance based on the position of a mark such as the recycle identification mark described in FIG. 1 is set as an imaging region.

In step S61, the molded body information acquisition unit 1 images the molded body and obtains a captured image of the surface of the molded body.

In step S62, the molded body information acquisition unit 1 determines whether or not the captured image acquired in step S61 includes a mark such as a recycle identification mark, and if the mark is included (Yes in S62), the molded body information acquisition unit 1 proceeds to step S63. When the mark is not included (No in S62), the process returns to step S61, and the captured image of the molded body is acquired again.

In step S63, the molded body information acquisition unit 1 cuts out, as image information, information on a region of a predetermined size at a position separated by a predetermined distance from the position of the mark in the captured image.

In step S64, the identification information conversion unit 2 binarizes the image information cut out in step S63, describes the image information in a matrix, arranges and encodes the image information according to a rule, and converts the image information into the identification information.

In step S65, the identification information conversion unit 2 determines whether or not the image information has been normally converted into the identification information in step S64, and if the image information has been normally converted (Yes in S65), the processing ends. When the conversion has not been performed normally (No in S65), the process returns to step S61, and the conversion processing of the identification information is repeated.

In step S65, when the conversion has not been performed normally, the identification information conversion unit 2 may display a warning to prompt re-imaging of the molded body, change of imaging conditions, or the like.

Returning to FIG. 3, the molded body management DB3 that stores the traceability information of the molded body will be described. The molded body management DB3 enables management of information on the life cycle of the molded body.

The information control unit 8 accesses the molded body management DB3 on the basis of the identification information of the molded body converted by the identification information conversion unit 2. The information control unit 8 performs processing of storing the production information and the life cycle information of the molded body in the molded body management DB for each piece of identification information.

The molded body management DB3 is a storage unit that stores, for each piece of identification information on a molded body, a database including production information 31 on the molded body, sales information 32 on the molded body, usage information 33, collection information 34, sorting processing information 35, regeneration processing information 36, and final disposal information 27.

In the molded body management DB3, a record is generated on the basis of identification information obtained by imaging the molded body at the time of production of the molded body, and a field of the production information 31 of the molded body is stored. In addition, when the molded body or the product including the molded body is sold, a field of the sales information 32 is stored.

Similarly, a field of usage information 33 is stored when a molded body or a product including the molded body is used, a field of collection information 34 is stored when the molded body or the product including the molded body is collected, a field of sorting processing information 35 is stored when the molded body or the product including the molded body is sorted, a field of regeneration processing information 36 is stored when the molded body is regenerated, and a field of final disposal information 37 is stored when the molded body is finally disposed.

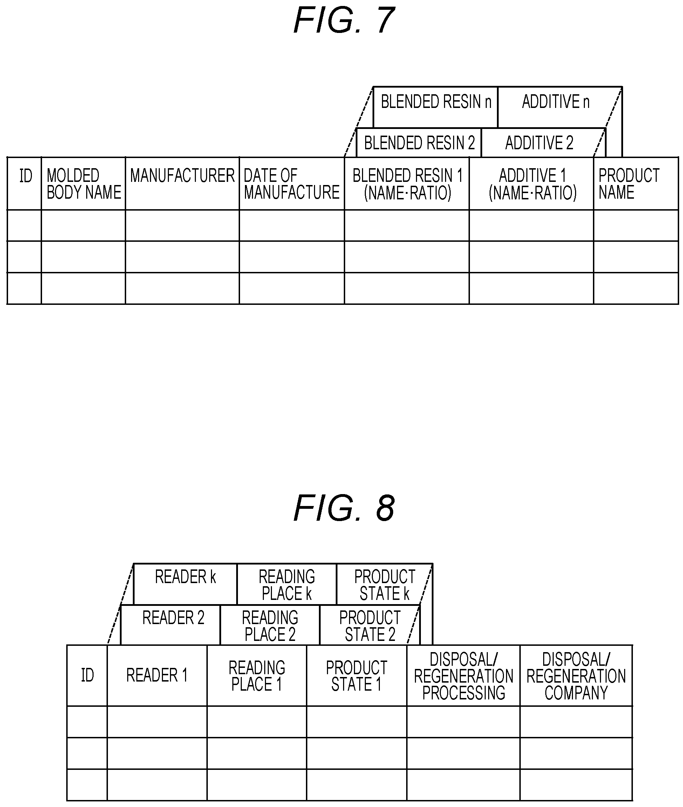

FIG. 7 is a diagram illustrating details of a field configuration of the production information 31 in the molded body management DB3.

The production information 31 includes a molded body name, a molding and manufacturing method, a manufacturer, date of manufacture, a name and a ratio of a blended resin, a name and a ratio of an additive, and a product name to which the molded body is applied, for each piece of identification information (ID) of the molded body. When the molded body is composed of a plurality of blended resins and additives, the name and ratio of each blended resin and the name and ratio of additives are stored. The constituent material of the molded body, the energy consumption amount and the carbon dioxide emission amount related to molding and production may also be stored.

In addition, the production information 31 may store a material origin of the molded body such as regenerated material or biomass, authentication information such as UL authentication, biomass-related authentication, or RoHS (instruction to restrict the use of specific harmful substances), a reading position of image information to be converted into identification information in the molded body, an energy consumption amount regarding production and a life cycle, and a carbon dioxide emission amount regarding production and a life cycle.

FIG. 8 is a diagram showing details of configurations of sales information 32, usage information 33, collection information 34, sorting processing information 35, regeneration processing information 36, and final disposal information 37(hereinafter, collectively referred to as life cycle information) in the molded body management DB3.

The life cycle information indicates traceability information, and includes a reader of the molded body, a reading place, a product state, a disposal/regeneration processing of regeneration, incineration, or landfill, and a disposal/regeneration processing company for each piece of identification information (ID) of the molded body. The reader, the reading place, and the product state store the state of the molded body by acquiring identification information of the molded body in the life cycle until production, usage, and disposal. The energy consumption amount and the carbon dioxide emission amount in the life cycle of the above-described production, usage, and disposal of the molded body may also be stored. In addition, in the case of moving a place in the life cycle, a moving means for transportation and conveyance of the molded body, and an energy consumption amount and a carbon dioxide emission amount thereof may also be stored.

For example, the reader, the reading place, and the production information are stored as the sales information 32, the usage information 33, the collection information 34, the sorting processing information 35, the regeneration processing information 36, and the final disposal information 37, respectively.

Although FIG. 3 illustrates an example in which the identification management device 6 and the molded body management DB3 of the identification management system according to the embodiment are connected to the network 7 at a ratio of 1 : 1, a plurality of identification management devices 6 and the molded body management DB3 may be connected to the network 7.

Although FIG. 3 illustrates an example in which the identification information conversion unit 2 that converts the identification information of the molded body from the image information is provided in the identification management device 6, a conversion server that converts the identification information may be provided in the network, the image information may be transmitted to the conversion server, the image information may be converted into identification information by the conversion server, and the identification information may be notified to the identification management device 6.

At this time, the image information or the identification information may be compressed and encrypted.

In the encryption, the identification information (ID) converted from the image information by the imaging region of the molded body, the conversion means of the identification information, and the conversion means of the identification information such as the conversion algorithm may be used as the encryption key. It is possible to prevent a person other than the person concerned in the life cycle management from reading or accessing the information by exclusively disclosing and providing the imaging region of the molded body, the conversion algorithm, and the identification management device 6 in which the conversion algorithm is implemented in the identification information change unit 2 to the designated reader and administrator regarding the life cycle including the production of the molded body as an encryption key permitted to the person concerned in the life cycle management of the molded body.

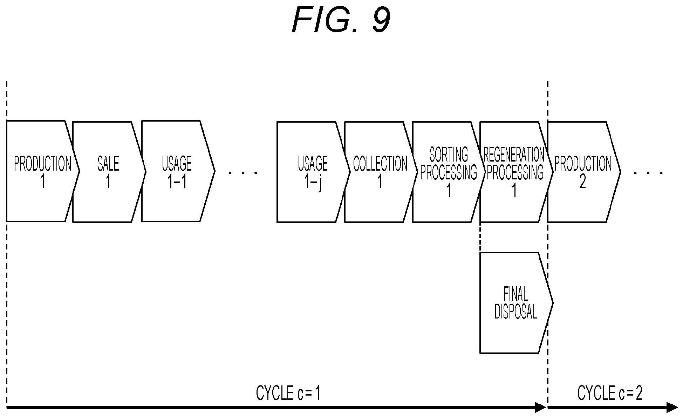

Next, a molded body management method by the identification management system according to the embodiment will be described in detail with reference to FIG. 9.

FIG. 9 illustrates a flow of each process of production, sale, usage, collection, sorting processing, regeneration processing, or final disposal of a product including a molded body. FIG. 9 shows that a cycle of c = 2 is performed when the molded body is regenerated after a cycle of c = 1, with the process from the production process to the regeneration processing or the final disposal as one cycle.

The suffixes for each process indicate this cycle.

In addition, the usage process is illustrated by being divided into different usage processes by suffixes from -1 to -j according to a change in a user of a product or a change in a usage place.

In the molded body management method by the identification management system according to the embodiment, the molded body information acquisition unit 1 and the identification information conversion unit 2 of the identification management device 6 acquire the identification information of the molded body and the information control unit 8 of the identification management device 6 records the production information or the life cycle information in the molded body management DB3 as described with reference to FIG. 6 in each process of production, sale, usage, collection, sorting processing, regeneration processing, or final disposal of the product. In the sales process, production information or life cycle information is not recorded in some cases.

Hereinafter, each process of production, sale, usage, collection, sorting processing, regeneration processing, or final disposal of the product will be described in detail.

First, the production process of a product will be described.

A molding machine for a molded body includes a mixing device for PP serving as a base material of the molded body and an additive, and an injection molding machine for heating and melting the mixture and injecting the mixture into a mold. When the injection molding machine is an axial rotary extruder having a mixing function, the molding machine for a molded body may be constituted only by the injection molding machine.

When the base material is other than PP of the thermoplastic resin, apparatuses such as extrusion molding, press molding, die coating, flow molding, printing, spray coating and 3D printing, and cutting molding can be applied according to the base material.

The injection-molded molded body is assembled and inspected into a product.

At this time, the manufacturer acquires the identification information of the molded body from the image information of the predetermined region of the molded body by the identification management device 6, and stores the production information described with reference to FIG. 7 in the molded body management DB3 in correspondence with the identification information.

In the sales process of a product, a seller acquires identification information of a molded body from image information of a predetermined region of the molded body by the identification management device 6 when the product arrives, is stored, or is shipped, and records life cycle information of a reader, a reading place, and a product state described in FIG. 8 in the molded body management DB3 in correspondence with the identification information.

In the usage process of a product, a seller acquires identification information of a molded body from image information of a predetermined region of the molded body by the identification management device 6 when the product is purchased, is stored, is transferred, or is discarded, and records life cycle information of a reader, a reading place, and a product state described in FIG. 8 in the molded body management DB3 in correspondence with the identification information.

When there are a plurality of users, the life cycle information is recorded for each user.

In the collection process of a product, a collector collects a product discarded by a user, acquires identification information of a molded body from image information of a predetermined region of the molded body by the identification management device 6, and records life cycle information of a reader, a reading place, and a product state described in FIG. 8 in the molded body management DB3 in correspondence with the identification information. Then, the collector transfers the product to the sorting processing process.

In the collection process of a product, the collector may refer to the product information in the molded body management DB3 based on the acquired identification information to acquire information on the product regeneration market, processing costs, laws and regulations, and the like, determine whether or not the product is to be discarded, and transfer the product to the final disposal process when the product is determined to be discarded. The product may be transferred to the final disposal process in accordance with the product state with reference to the life cycle information in the molded body management DB3.

In the sorting processing process of a product, the sorting processing company sorts products transferred from the collection process of the product at the time of receipt, storage, or shipment, acquires identification information of a molded body from image information of a predetermined region of the sorted molded body by the identification management device 6, and records life cycle information of a reader, a reading place, and a product state described in FIG. 7 in the molded body management DB3 in correspondence with the identification information. Then, the sorting processing company transfers the sorted molded bodies to the regeneration processing process or the final disposal process.

Specifically, in the sorting processing process, the sorting processing company acquires information on the state of the product, the regeneration market of the product, the processing cost, laws and regulations, and the like from the outside, and determines whether or not the molded body can be regenerated from the life cycle information corresponding to the identification information of the sorted molded body. When the molded body can be regenerated, the molded body is transferred to the regeneration processing process, and when the molded body cannot be regenerated, the molded body is transferred to the final disposal process. The determination result as to whether or not the regeneration is possible is recorded in the life cycle information corresponding to the identification information.

In the regeneration processing process of a product, the regeneration processing company acquires identification information of the molded body from image information of a predetermined region of the molded body by the identification management device 6 for the molded body transferred from the sorting processing process, and acquires life cycle information corresponding to the identification information with reference to the molded body management DB3.

Then, the regeneration processing company determines whether the molded body is reused (reuse) or pulverized and recycled as a base material according to the life cycle information of the molded body. The determination result of reuse or recycling is recorded in life cycle information corresponding to the identification information, and the molded body to be reused and the pulverized molded body are transferred to the production process of the regenerated product.

Specifically, when recycling the molded body, the regeneration processing company pulverizes the molded body having the same name and ratio of the blended resin and the additive in the production information corresponding to the identification information to obtain a base material of the molded body of the regenerated product.

In the final disposal process of the product, the final disposal company acquires the identification information of the molded body from the image information of the predetermined region of the molded body by the identification management device 6, and in response to the identification information, records the life cycle information of the reader, the reading place, and the product state described in FIG. 7 in the molded body management DB3, and records the disposal/regeneration processing and the disposal/regeneration processing company of the life cycle information. Then, the final disposal company discards the product.

When a molded body is to be reused, the production process of the regenerated product in the cycle of c = 2 diverts the production information and life cycle information in the molded body management DB3 corresponding to the identification information of the molded body to the production information and the life cycle information, and clears the setting contents for the product name in the production information, the disposal and regeneration processing of the life cycle information, and the disposal and regeneration processing company of the life cycle information.

When the molded body is recycled, the production process of the regenerated product acquires identification information of the molded body from image information of a predetermined region of the molded body for the manufactured molded body, and stores the production information described in FIG. 7 in the molded body management DB3 in correspondence with the identification information.

Each process of sale, usage, collection, sorting processing, regeneration processing, and final disposal of the regenerated products in the subsequent cycle of c = 2 is performed in the same manner as in the cycle of c = 1.

As described above, in each process of production, sale, usage, collection, sorting processing, regeneration processing, and final disposal of a product, the identification management device 6 sets production information and life cycle information in the molded body management DB3 on the basis of identification information of the molded body converted from image information of a predetermined region of the molded body, and the identification management system according to the embodiment manages a life cycle until production, usage, and disposal of the molded body.

In addition, regarding the production information and the life cycle information in real time, it is possible to share the production information and the life cycle information with a person involved in each process of the life cycle via the network 7, and create and provide seamless information to the supervisor of the life cycle management and the supervising agency.

In addition, the present invention is not limited to the above-described embodiments, and includes various modifications. The above embodiments have been described in detail for easy understanding in the present invention, and are not necessarily limited to those having all the described configurations. Further, a part of the configuration of one embodiment can be replaced with the configuration of another embodiment, and the configuration of another embodiment can be added to the configuration of one embodiment.

### Reference Signs List

- 1: molded body information acquisition unit
- 2: identification information conversion unit
- 3: molded body management DB
- 4: input unit
- 5: display unit
- 6: identification management device
- 7: network
- 8: information control unit

## Claims

1. An identification management system that manages traceability of a molded body, the identification management system comprising:
a molded body information acquisition unit that acquires image information of the molded body;
an identification information conversion unit that converts a random pattern in a predetermined region of the image information into identification information; and
an information control unit that performs processing of storing production information or life cycle information of the molded body in a molded body management database for each piece of the identification information.

2. The identification management system according to claim 1, wherein the information control unit calls and outputs production information or the life cycle information of the molded body corresponding to the identification information converted by the identification information conversion unit from the molded body management database.

3. The identification management system according to claim 1, wherein
the production information includes a name and a ratio of a blended resin and an additive, and
the life cycle information includes sales information, usage information, collection information, sorting processing information, regeneration processing information, and final disposal information.

4. The identification management system according to claim 1, wherein a random pattern of the molded body is expressed by an additive blended with a base material of the molded body.

5. The identification management system according to claim 4, wherein the random pattern of the molded body is any one of dots, satin, grainy, marble, noise, fractal, and particles.

6. The identification management system according to claim 4, wherein
the base material is a thermoplastic resin, a metal, a ceramic, glass, or biomass, and
the additive is any one of mica, talc, carbon, nitride, aluminum, gold, silver, zinc oxide, titanium oxide, iron oxide, silicate, aluminum hydroxide, magnesium hydroxide, clay mineral, glass particles, urethane resin, azo compound, phthalocyanine compound, glass fiber, carbon fiber, dietary fiber, and powder of dietary biomass.

7. The identification management system according to claim 1, wherein the identification information conversion unit converts the number of singular points of a random pattern in a predetermined region of the image information, arrangement of patterns, an area ratio of patterns, contrast of a predetermined region of the image information, or chromaticity of a predetermined region into identification information.

8. The identification management system according to claim 1, wherein the identification information conversion unit includes a conversion means of identification information by any one of a method of arranging information of each coordinate of a predetermined region of the image information according to a specified rule by binarization based on a threshold, signal strength enhancement by grayscale, or color information enhancement (color coding to RGB), a method of digitizing a signal strength distribution, a method of acquiring a signal strength distribution as a spatial frequency, and a method of digitizing the information by machine learning according to a conversion algorithm separately created by percitent homology.

9. The identification management system according to claim 1, wherein the identification information conversion unit converts a random pattern into identification information regarding a region of a predetermined size enclosing a mark of the molded body in the image information at the center or an imaging region of a predetermined size separated by a predetermined distance with respect to the position of the mark of the molded body in the image information.

10. The identification management system according to claim 1, wherein the molded body management database stores any one of an energy consumption amount and a carbon dioxide emission amount regarding production and a life cycle of the molded body for each piece of the identification information.

11. An identification management method for managing traceability of a molded body, the identification management method comprising the steps of:
acquiring image information of the molded body;
converting a random pattern of a predetermined region of the image information into identification information; and
storing production information and life cycle information of the molded body in a molded body management DB for each piece of the identification information.

12. The identification management method according to claim 11, further comprising:
determining whether or not a mark of the molded body is included in the image information; and
converting, when the mark is included, information of an imaging region of a predetermined size at a position away from the position of the mark by a predetermined distance into identification information as image information.

13. The identification management method according to claim 11, further comprising storing production information and life cycle information of the molded body in a molded body management DB for each piece of the identification information in each process of production, sale, usage, collection, sorting processing, regeneration processing, or final disposal of the molded body or a product including the molded body.
